# EUROPÄISCHE PATENTSCHRIFT

(11) **EP 4 528 033 B1**
(45) Veröffentlichungstag und Bekanntmachung des Hinweises auf die Patenterteilung: **17.12.2025**
(21) Anmeldenummer: 23198702.5
(22) Anmeldetag: 21.09.2023
(51) Int. Cl.: E01C 19/48, E01C 23/088

(54) **STRASSENBAUMASCHINE**
ROAD CONSTRUCTION MACHINE
ENGIN DE CONSTRUCTION ROUTIÈRE

(43) Veröffentlichungstag der Anmeldung: 26.03.2025
(73) Patentinhaber: Joseph Vögele AG, 67067 Ludwigshafen/Rhein (DE)
(72) Erfinder: Oettinger, Klaus, 68804 Altlußheim (DE)
(74) Vertreter: Grünecker Patent- und Rechtsanwälte PartG mbB

(56) Entgegenhaltungen:
- EP-B1- 0 628 661
- DE-A1- 102013 104 211
- US-A1- 2022 316 333

## Beschreibung

Die Erfindung bezieht sich auf eine Straßenbaumaschine gemäß dem Oberbegriff des Anspruchs 1 und ein Verfahren gemäß dem Anspruch 13.

Straßenfertiger (oder Asphaltfertiger) sind Straßenbaumaschinen, die im Wesentlichen zum Einbau von Asphaltmischgütern im Straßenbau eingesetzt werden. Die wesentlichen Komponenten eines Straßenfertigers umfassen typischerweise ein Fahrwerk, einen Materialbehälter (Aufnahmebehälter bzw. Gutbunker), Kratzerbänder, eine Verteilerschnecke, eine Einbaubohle, eine Heizung und eine Nivellierautomatik.

Aus der EP 0 628 661 B1 ist ein Straßenfertiger mit einem Primärantriebsaggregat, das als eigenständige Baueinheit ausgebildet ist und vom Straßenfertiger abnehmbar ist, bekannt. Aus der EP 2 333 158 B2 ist ein dieselhydraulisches Antriebssystem für einen Straßenfertiger bekannt, wo die für den Betrieb des Straßenfertigers notwendige Energie von einem Verbrennungsmotor bzw. von einem Dieselmotor (Primärantriebsquelle) bereitgestellt wird. EP 2 333 158 B2 offenbart weiterhin, dass der Dieselmotor direkt mit Hydraulikpumpen und andererseits direkt mit dem Generator verbunden ist.

Die Anwendung von dieselelektrischen Antriebssystemen in den Straßenbaumaschinen ist auch bekannt. Der dieselelektrische Antrieb enthält ein Übertragungssystem, mit dem die von Dieselmotoren bereitgestellte mechanische Energie mit Hilfe eines Generators in elektrische Energie umgewandelt und auf den elektrischen Einzelantrieb übertragen wird.

In den letzten Jahren haben die Emissionsminderungsziele die Elektrifizierung der Straßenbaumaschinen vorangetrieben, und inzwischen sind Straßenbaumaschinen, die einen Elektromotor als Primärantriebsquelle aufweisen, aus dem Stand der Technik bekannt.

Die Verfügbarkeit von Strom oder anderen emissionsfreien Energiequellen sowie die Abgasnormen variieren in unterschiedlichen Ländern. Für die Hersteller von Straßenbaumaschinen ist es sehr kostenaufwendig, je nach der Emissionsgesetzgebung und der Infrastruktur der Länder für die emissionsfreien Energiequellen einen Maschinentyp basierend auf einem passenden Antriebskonzept herzustellen.

Aufgabe der Erfindung ist es, einen einzigen Straßenbaumaschinen-Typ zur Verfügung zu stellen, in dem das Primärantriebsystem mit wenig Aufwand angepasst bzw. ausgetauscht werden kann. Beispielsweise kann es je nach der verfügbaren Energiequelle und Emissionsgesetzgebung von unterschiedlichen Ländern erforderlich sein, ein anderes Primärantriebssystem zu verwenden.

Diese Aufgabe wird durch die Merkmale des Anspruchs 1 oder des Anspruchs 13 gelöst.

Die Erfindung betrifft gemäß einem ersten Aspekt eine Straßenbaumaschine umfassend ein Fahrgestell und ein Fahrwerk. Die Straßenbaumaschine kann des Weiteren ein oder mehrere Arbeitsaggregate zum Ein- oder Ausbau eines Straßenbelages und/oder zum Fördern eines Einbaumaterials umfassen. Die Straßenbaumaschine umfasst ein Primärantriebssystem, ein oder mehrere Einzelantriebe und eine Schnittstelle. Die Einzelantriebe können dazu ausgebildet sein, das Fahrwerk und/oder die Arbeitsaggregate anzutreiben. Das Primärantriebssystem ist dazu ausgebildet, den einen oder die mehreren Einzelantriebe der Straßenbaumaschine anzutreiben. Das Primärantriebssystem ist über die Schnittstelle koppelbar mit dem einen oder den mehreren Einzelantrieben verbunden. Insbesondere wird dadurch eine Versorgung des einen oder der mehreren Einzelantriebe mit Strom aus dem Primärantriebssystem ermöglicht. Das Primärantriebssystem kann austauschbar ausgebildet sein.

Das Primärantriebssystem kann eine Primärantriebsquelle aufweisen. Die Primärantriebsquelle kann ein Verbrennungsmotor, eine Brennstoffzelle, ein Akkumulator oder eine außerhalb der Straßenbaumaschine angeordnete externe Stromquelle sein.

Die Straßenbaumaschine kann eine Pufferbatterie aufweisen. Durch die Pufferbatterie können Belastungs- bzw. Leistungsspitzen ausgeglichen werden. Dadurch kann das Primärantriebssystem und/oder die Primärantriebsquelle kleiner dimensioniert werden. Die Pufferbatterie kann eine Gleichstrombatterie sein. Die Pufferbatterie kann eine Wechselstrombatterie sein. Die Pufferbatterie kann zwischen dem Primärantriebssystem und dem ein oder den mehreren Einzelantrieben angeordnet sein.

Die Straßenbaumaschine kann einen ersten Stromrichter aufweisen. Der erste Stromrichter kann zwischen dem Primärantriebssystem und dem einen oder den mehreren Einzelantrieben angeordnet sein Der erste Stromrichter kann zwischen dem Primärantriebssystem und der Pufferbatterie angeordnet sein. Der erste Stromrichter kann zwischen der Schnittstelle und der Pufferbatterie angeordnet sein.

Der erste Stromrichter kann ein erster Wechselrichter, ein erster Gleichrichter oder ein erster Wandler sein. Der erste Stromrichter kann erforderlich sein, wenn der von dem Primärantriebssystem gelieferte Strom nicht dem von der Pufferbatterie speicherbaren Strom oder dem von den Einzelantrieben benötigten Strom entspricht. Beispielsweise ist ein Gleichrichter erforderlich, wenn vom Primärantriebssystem Wechselstrom erzeugt wird und eine Gleichstrombatterie als Pufferbatterie verwendet wird. Ein Wechselrichter ist erforderlich, wenn vom Primärantriebssystem Gleichstrom erzeugt wird und eine Wechselstrombatterie als Pufferbatterie verwendet wird. Ein Wandler kann erforderlich sein, wenn die vom Primärantriebssystem gelieferte Spannung nicht der Spannung der Pufferbatterie entspricht.

Die Straßenbaumaschine kann einen zweiten Stromrichter aufweisen. Der zweite Stromrichter kann zwischen der Pufferbatterie und dem einen oder den mehreren Einzelantrieben angeordnet sein. Wenn der in der Pufferbatterie gespeicherten Strom (Gleich- oder Wechselstrom) nicht dem von den Einzelantrieben benötigtem Strom entspricht, ist der zweite Stromrichter erforderlich. Der zweite Stromrichter kann ein Wechselrichter sein. Der zweite Stromrichter kann ein Gleichrichter sein. Es können auch mehrere zweite Stromrichter zwischen der Pufferbatterie und den Einzelantrieben angeordnet sein. Der Stromverteiler kann zwischen dem einen oder mehreren Stromrichtern und den Einzelantrieben angeordnet sein.

Die Straßenbaumaschine kann einen Stromverteiler aufweisen. Der Stromverteiler kann zwischen der Pufferbatterie und den Einzelantrieben angeordnet sein. Der Stromverteiler kann zwischen der Pufferbatterie und dem einen oder mehreren Stromrichtern angeordnet sein.

Das Primärantriebssystem kann einen Verbrennungsmotor, insbesondere einen Dieselmotor aufweisen. Das Primärantriebssystem kann einen Kraftstofftank und/oder einen Biokraftstofftank aufweisen.

Das Primärantriebssystem kann einen Gasmotor aufweisen. Das Primärantriebssystem kann Wasserstofftank oder einen Drucktank, insbesondere einen Drucktank für Erdgas und/oder Autogas, aufweisen.

Das Primärantriebssystem kann eine Brennstoffzelle aufweisen. Das Primärantriebssystem kann Wasserstofftank oder einen Drucktank, insbesondere einen Drucktank für Erdgas und/oder Autogas, aufweisen.

Das Primärantriebssystem kann einen Akkumulator aufweisen. Das Primärantriebssystem und einen dritten Stromrichter aufweisen. Der dritte Stromrichter kann ein Wechselrichter, ein Gleichrichter oder ein Stromwandler sein.

Das Primärantriebssystem kann Lastaufnahmepunkte aufweisen. Die Lastaufnahmepunkte könnten dazu ausgebildet sein, eine Angriffsfläche und/oder einen Angriffspunkt für einen Kran oder Gabelstapler darzustellen. Die Lastaufnahmepunkte können an der Primärantriebsquelle angebracht sein. Die Lastaufnahmepunkte können an einem Behälter, insbesondere einem Kraftstofftank, einem Drucktank und/oder einem Wasserstoff, des Primärantriebssystems angebracht sein.

Die Lastaufnahmepunkte können an einem Verbrennungsmotor, einer Brennstoffzelle, einem Akkumulator, einem Kraftstofftank, einem Drucktank, einem Wasserstofftank, oder einer beliebigen Kombination davon angebracht sein. Umfasst das Primärantriebssystem beispielsweise einen Verbrennungsmotor und einen Kraftstofftank, so können die Lastaufnahmepunkte am Verbrennungsmotor und dem Kraftstofftank angebracht sein. Umfasst das Primärantriebssystem beispielsweise einen Gasmotor und einen Drucktank, so können die Lastaufnahmepunkte am Gasmotor und dem Drucktank angebracht sein. Umfasst das Primärantriebssystem beispielsweise eine Brennstoffzelle und einen Wasserstofftank, so können die Lastaufnahmepunkte an der Brennstoffzelle und dem Wasserstofftank angebracht sein.

Die Straßenbaumaschine kann unterschiedliche Primärantriebssysteme aufweisen. Beispielsweise kann die Straßenbaumaschine ein erstes Primärantriebssystem und ein zweites Primärantriebssystem aufweisen. Das erste Primärantriebssystem oder das zweite Primärantriebssystem kann einen Verbrennungsmotor und einem Kraftstofftank aufweisen. Das erste Primärantriebssystem oder das zweite Primärantriebssystem kann einen Gasmotor und einen Drucktank aufweisen. Das erste Primärantriebssystem oder das zweite Primärantriebssystem kann einen Wasserstofftank und eine Brennstoffzelle aufweisen. Das erste Primärantriebssystem oder das zweite Primärantriebssystem kann einen Akkumulator und eine mit einer externen Stromquelle verbundene Oberleitung, Stromschiene und/oder Schleppkabel aufweisen.

Die unterschiedlichen Primärantriebssysteme, insbesondere das erste Primärantriebssystem und das zweite Primärantriebssystem, können gleiche Abmessungen aufweisen. Die unterschiedlichen Primärantriebssysteme, insbesondere das erste Primärantriebssystem und das zweite Primärantriebssystem, können ein einheitliches Lochbild für eine Schraub- und/oder Bolzenverbindung aufweisen. Die unterschiedlichen Primärantriebssysteme, insbesondere das erste Primärantriebssystem und das zweite Primärantriebssystem, können eine einheitliche Verriegelungskomponente aufweisen. Die einheitliche Verriegelungskomponente kann Teil eines Verriegelungssystems, das insbesondere eine Verbindung und/oder Verriegelung des Primärantriebssystems mit der Straßenbaumaschine ermöglicht, sein. Das Verriegelungssystem kann selbsttätig sein und/oder automatisch funktionierten. Die einheitliche Verriegelungskomponente kann Teil einer Schnappverbindung sein.

Das erste Primärantriebssystem und das zweite Primärantriebssystem können parallel auf der Straßenbaumaschine installiert sein. Das erste Primärantriebssystem und das zweite Primärantriebssystem können als alternative Module ausgebildet sein. Das heißt insbesondere, dass wenn das erste Primärantriebssystem in der Straßenbaumaschine verbaut ist, so wird das zweite Primärantriebssystem außerhalb des Straßenbaumaschine gelagert und umgekehrt.

Die Schnittstelle kann automatisch ausgebildet sein. Die Schnittstelle kann eine automatische Verriegelung und Entriegelung umfassen. Die Schnittstelle kann eine lösbare mechanische Verbindung umfassen. Die lösbare mechanische Verbindung kann dazu ausgebildet sein, das Primärantriebssystem, insbesondere die Primärantriebsquelle, an der Straßenbaumaschine zu befestigen. Die lösbare mechanische Verbindung kann automatisch ausgebildet sein. Die Schnittstelle kann eine erste lösbare elektrische Verbindung umfassen. Die erste lösbare elektrische Verbindung kann dazu ausgebildet sein, das Primärantriebssystem mit der Pufferbatterie elektrisch zu verbinden. Die Schnittstelle kann eine zweite lösbare elektrische Verbindung umfassen. Die zweite lösbare elektrische Verbindung kann dazu ausgebildet sein, eine elektrische Verbindung zwischen dem Primärantriebssystem und einer Steuerung der Straßenbaumaschine zu ermöglichen. Die zweite lösbare elektrische Verbindung kann dazu ausgebildet sein, eine Kommunikation zwischen dem Primärantriebssystem und der restlichen Straßenbaumaschine, insbesondere der Steuerung, zu ermöglichen. Die Schnittstelle kann eine automatische Verriegelung und Entriegelung für die lösbare mechanische Verbindung, die erste lösbare elektrische Verbindung und/oder die zweite lösbare elektrische Verbindung umfassen.

Die Straßenbaumaschine umfasst eine Steuerung. Die Steuerung ist dazu ausgebildet, die Art des Primärantriebssystems, insbesondere der Primärantriebsquelle, zu erkennen. Beispielsweise kann die Steuerung durch Kommunikation mit dem Primärantriebssystem, insbesondere über die zweite lösbare elektrische Verbindung, erkennen, ob das Primärantriebssystem einen Verbrennungsmotor, einen Gasmotor und/oder eine Brennstoffzelle aufweist und/oder mit einer externen Stromquelle, beispielsweise einem öffentlichen Stromnetz oder einer Stromerzeugung vor Ort, verbunden ist.

Die Steuerung kann dazu ausgebildet sein, basierend auf der Art des Primärantriebssystems antriebsspezifische Informationen einem Nutzer darzustellen, insbesondere auf einem Bedienerdisplay zu visualisieren. Wenn das Primärantriebssystem einen Tank umfasst, beispielsweise einen Kraftstofftank, einen Drucktank und/oder einen Wasserstofftank, kann die Steuerung dazu ausgebildet sein, den Füllzustand des Tanks darzustellen. Die Steuerung kann ebenfalls dazu ausgebildet sein, die aktuelle Leistung des Verbrennungsmotors, des Gasmotors oder der Brennstoffzelle darzustellen. Die Steuerung kann dazu ausgebildet sein, in Abhängigkeit der Art des Primärantriebssystems bestimmte Funktionen zu aktivieren oder zu deaktivieren. Beispielsweise können bestimmte Darstellungen oder Schaltflächen auf dem Bedienerdisplay in Abhängigkeit des Primärantriebssystems ausgegraut oder ausgeblendet werden.

Die Steuerung kann dazu ausgebildet sein, die Straßenbaumaschine in Abhängigkeit des Primärantriebssystems zu steuern. Die Steuerung kann dazu ausgebildet sein, den einen oder die mehreren Einzelantriebe der Straßenbaumaschine in Abhängigkeit des Primärantriebssystems anzusteuern.

Die Einzelantriebe können elektrische Antriebe zum Ausführen von translatorischen und/oder rotatorischen Bewegungen oder elektrisch betreibbare Hydraulikaggregate zum Ausführen von translatorischen und/oder rotatorischen Bewegungen sein.

Die Straßenbaumaschine kann ein Straßenfertiger sein. Der Straßenfertiger kann einen Materialbehälter (Aufnahmebehälter bzw. Gutbunker) zur Aufnahme von Einbaumaterial, und Arbeitsaggregate wie ein Materialtransportapparat wie eine Fördervorrichtung, eine Verteilerschnecke, eine Einbaubohle, eine Nivellierautomatik, und eine oder mehrere elektrisch betreibbare Heizvorrichtung aufweisen. Der Straßenfertiger kann die folgenden Einzelantriebe aufweisen: Rotatorische Antriebe für das Fahrwerk, rotatorische Antriebe für die Kratzerbänder, rotatorische Antriebe für die Schnecken, lineare Antriebe für einen Gutbunkerwandzylinder, lineare Antriebe für den Nivellierzylinder, lineare Antriebe für das Heben und Senken der Bohle, lineare Antriebe für das Teleskopieren der Bohle und rotatorische Antriebe bzw. ein rotatorisches Antriebssystem für die Verdichtungseinrichtungen der Bohle. Eine Bohlenheizung kann an der elektrischen Schnittstelle angeschlossen sein.

Die Straßenbaumaschine kann ein Beschickerfahrzeug sein. Beschickerfahrzeuge sind Straßenbaumaschinen, die eingesetzt sind, um Straßenfertiger mit Einbaumaterial zu versorgen. Zu diesem Zweck wird das Beschickerfahrzeug in Arbeitsrichtung vor den Straßenfertiger gesetzt. Ein solches Beschickerfahrzeug ist aus der EP 2 377 995 A1 bekannt. Die Beschickerfahrzeuge umfassen in der Regel einen Gutbunker sowie eine Fördererinrichtung, um Einbaumischgut aus dem Beschicker-Gutbunker in den Gutbunker des Straßenfertigers zu transportieren.

Die Straßenbaumaschine kann eine Fräse sein. Fräsen bzw. Kaltfräsen sind bekannt als Straßenbaumaschinen zum Bearbeiten von Fahrbahnen beispielsweise zum Fahrbahndeckenausbau. Eine Kaltfräse weist typischerweise einen Rahmen auf, der von mit Raupen oder Rädern versehenen Antriebseinheiten angetrieben wird. Der Rahmen trägt das Energieversorgungsmodul, eine Bedienerstation, eine Fräswalze und Fördervorrichtungen.

Die Straßenbaumaschine kann ein Gleitschalungsfertiger sein. Gleitschalungsfertiger sind Straßenbaumaschinen, die in dem Aufbau von Betondecken eingesetzt werden. Betondecken werden für unterschiedlichste Anwendungen eingesetzt wie die Herstellung von Autobahnen, Fernstraßen, Start- und Landebahnen auf Flughäfen, Containerstellplätzen oder Trassen für den Schienenverkehr. Der Gleitschalungsfertiger kann in Längs- und Querrichtung teleskopierbare Maschinenrahmen, Glätteeinrichtungen (Längsglätter, Querglätter), und Hydraulikaggregate zum Antreiben der Glätteeinrichtungen aufweisen.

Die Erfindung betrifft gemäß einem zweiten Aspekt ein Verfahren zur Montage eine Straßenbaumaschine. Die Straßenbaumaschine umfasst einen oder mehrere Einzelantriebe, die zum Antreiben der Straßenbaumaschine, insbesondere zum Antreiben eines Fahrwerks und/oder von Arbeitsaggregaten der Straßenbaumaschine, ausgebildet sind.

Das Verfahren umfasst unter anderem die folgenden Schritte: Koppeln des einen oder der mehreren Einzelantriebe mit dem Fahrwerk und/oder den Arbeitsaggregaten. Anschließen des einen oder der mehreren der Einzelantriebe an einer Schnittstelle. Einsetzen eines ersten Primärantriebssystems in die Straßenbaumaschine. Anschließen des ersten Primärantriebssystems an die Schnittstelle. Die Fachperson versteht, dass die einzelnen Verfahrensschritte, sofern technisch möglich, in beliebiger Reihenfolge durchgeführt werden können.

Das Verfahren umfasst des Weiteren das Trennen des ersten Primärantriebssystems von der Schnittstelle. Das Verfahren umfasst des Weiteren das Entfernen des ersten Primärantriebssystems von der Straßenbaumaschine. Das Verfahren umfasst des Weiteren das Einsetzen eines zweiten Primärantriebssystems in die Straßenbaumaschine. Das Verfahren umfasst des Weiteren das Anschließen des zweiten Primärantriebssystems an die Schnittstelle. Das erste Primärantriebssystem und das zweite Primärantriebssystem sind voneinander unterschiedlich.

Das Verfahren kann des Weiteren das Einsetzen einer Pufferbatterie in die Straßenbaumaschine umfassen. Das Verfahren kann des Weiteren das Anschließen des ersten und/oder zweiten Primärantriebssystems an die Pufferbatterie, insbesondere über die Schnittstelle, umfassen.

Die Erfindung betrifft gemäß einem dritten Aspekt eine Straßenbaumaschine umfassend ein Fahrgestell, ein Fahrwerk, mehrere Arbeitsaggregate zum Ein- oder Ausbauen eines Straßenbelags und/oder zum Fördern eines Einbaumaterials, ein Primärantriebssystem zum Antreiben von Getrieben der Straßenbaumaschine, insbesondere des Fahrwerks und/oder der Arbeitsaggregate der Straßenbaumaschine, wobei das Primärantriebssystem mehrere Einzelantriebe zur mechanischen Kopplung mit den Getrieben und ein Energieversorgungssystem zum Versorgen der Einzelantriebe mit elektrischem Strom aufweist. Mindestens drei gesonderte Energieversorgungspfade umfassend jeweils eine gesonderte Primärantriebsquelle oder verbunden jeweils mit einer gesonderten Primärantriebsquelle sind in dem Energieversorgungssystem integrierbar/integriert, insbesondere unabhängig oder getrennt voneinander. Das Energieversorgungsmodul ist von dem Fahrgestell getragen.

Ein Energieversorgungspfad kann ein Energieversorgungsmodul des Energieversorgungssystems sein. Eine strukturelle Komponente des Energieversorgungspfads kann temporär in dem Energieversorgungssystem integriert sein, bevorzugt indem sie im für das Energieversorgungsmodul vorgesehenen Bauraum montiert wird.

Jeder der mindestens drei gesonderten Energieversorgungspfade kann einzeln und/oder temporär in dem Energieversorgungssystem integriert werden. Es wäre auch möglich, mehrere der mindestens drei gesonderten Energieversorgungspfade in Kombination, in dem Energieversorgungssystem, insbesondere temporär, zu integrieren. Es wäre auch möglich, alle der mindestens drei gesonderten Energieversorgungspfade gemeinsam in dem Energieversorgungssystem zu integrieren. Es wäre auch möglich, dass mehr als drei gesonderte Energieversorgungspfade, beispielsweise vier bis sechs oder fünf gesonderte Energieversorgungspfade, in dem Energieversorgungssystem integriert werden.

Jeder der mindestens drei gesonderten Energieversorgungspfade kann einzeln elektrischen Strom für das Antreiben der Einzelantriebe zur Verfügung stellen und/oder das Primärantriebssystem kann lediglich elektrisch betreibbare Einzelantriebe umfassen. Für das Energieversorgungssystem mit mindestens drei gesonderten Energieversorgungspfaden umfassend jeweils eine gesonderte Primärantriebsquelle kann die Straßenbaumaschine eine Bauplattform aufweisen. Auf der Bauplattform kann ein gesonderter Bauraum für jede Komponente der drei gesonderten Energieversorgungspfade verfügbar sein. Dies kann es ermöglichen, all die mindestens drei gesonderten Energieversorgungspfade gleichzeitig auf der Straßenbaumaschine, insbesondere auf der Bauplattform, unterzubringen, bevorzugt parallel zueinander anzuschließen. Es wäre auch möglich, die mindestens drei gesonderten Energieversorgungspfade umfassend jeweils eine gesonderte Primärantriebsquelle in dem Energieversorgungssystem ungleichzeitig (zeitlich versetzt voneinander) unterzubringen. Beispielsweise kann temporär nur einer der mindestens drei gesonderten Energieversorgungspfade auf dem spezifisch für diese Energieversorgungspfade vorgesehenen Bauraum der Straßenbaumaschine, insbesondere der Bauplattform, untergebracht werden (d.h. die Komponente dieses Energieversorgungspfades, beispielsweise einen Kraftstofftank, einen Verbrennungsmotor, einen Generator, in dem Energieversorgungssystem integriert werden). Die weiteren Bauräume für die weiteren mindestens zwei Energieversorgungspfade können leer bleiben. Je nach Bedarf oder je nach der zur Verfügung stehenden Energiequelle kann der Energieversorgungspfad in der Straßenbaumaschine ausgebaut werden, d.h. die Komponente dieses Energieversorgungspfades aus der Straßenbaumaschine entfernt werden. Darauffolgend kann beispielsweise eine Komponente eines anderen Energieversorgungspfades der weiteren mindestens drei Energieversorgungspfade auf dem spezifisch für diese Energieversorgungspfade vorgesehenen Bauraum der Straßenbaumaschine, insbesondere der Bauplattform, unterbracht werden (d.h. die Komponente dieses Energieversorgungspfades, beispielsweise ein Wasserstofftank, oder eine Brennstoffzelle, in dem Energieversorgungssystem integriert werden). Dadurch kann die Primärantriebsquelle der Straßenbaumaschine ausgetauscht werden. Dabei kann die Primärantriebsquelle der Straßenbaumaschine aus unterschiedlichen Primärantriebsquellen (beispielsweise Verbrennungsmotor, Brennstoffzelle, Akkumulator oder externe Stromquelle) ausgewählt werden.

Die Erfindung bietet mehrere Vorteile: Zum Beispiel kann durch die Erfindung die Anzahl von Straßenbaumaschinentypen reduziert werden und ein Straßenbaumaschinentyp zur Verfügung gestellt werden, in dem die Primärantriebsquelle je nach der in dem Vertriebsziel zur Verfügung stehenden oder temporär passenden Energiequelle (oder zum Beispiel je nach der geltenden Abgasnorm), vor der Lieferung oder im Laufe der Betriebsdauer einfacherweise ausgetauscht werden. Dies ermöglicht die Nutzung von unterschiedlichen Primärenergiequellen für dieselbe Straßenbaumaschine für den Antrieb. Bei der Straßenbaumaschine kann ein Kunde entsprechend lokaler Gesetzgebung und/oder Ressourcenverfügbarkeit das Antriebskonzept bzw. den nötigen Energieversorgungspfad auswählen.

Die Herstellung eines einzigen Maschinentyps für alle Vertriebsziele verringert vorteilhafterweise die Bauteilvielfalt und reduziert erheblich die Baukosten. In dieser Straßenbaumaschine bzw. Straßenbaumaschinentyp hat das Energieversorgungssystem eine modulare Bauweise. In dem Energieversorgungssystem ist jeweils ein Bausystem bzw. ein Bauraum für die gewünschte/geplante Primärantriebsquelle, insbesondere für die Energieversorgungspfade umfassend die gewünschte Primärantriebsquelle, vorhanden.

Ein weiterer Vorteil der Erfindung liegt darin, in derselben Straßenbaumaschine gleichzeitig mehrere gesonderte Energieversorgungspfade umfassend jeweils eine gesonderte Primärantriebsquelle zur Verfügung zu stellen. Dadurch können die Einzelantriebe gleichzeitig oder zeitlich versetzt voneinander mittels mehrerer unterschiedlicher Primärantriebsquellen angetrieben werden. Je nach Bedarf oder Emissionsgesetzgebung vor Ort können die Einzelantriebe lediglich von emissionsfreien Primärantriebsquellen (beispielsweise Brennstoffzelle oder Akkumulator oder externe Stromquelle wie der öffentliche Stromnetz) angetrieben werden.

Die Primärantriebsquelle kann ein Verbrennungsmotor, beispielsweise ein Dieselmotor, ein Gasmotor oder ein Wasserstoffmotor sein. Der Verbrennungsmotor kann einen Generator aufweisen oder an einem Generator mechanisch angeschlossen sein. Die Primärantriebsquelle kann eine galvanische Zelle, beispielsweise eine Brennstoffzelle, ein Akkumulator oder eine Batterie sein. Die Brennstoffzelle kann eine Wasserstoff-Sauerstoff-Brennstoffzelle sein. Die Brennstoffzelle kann eine chemische Reaktionsenergie eines kontinuierlich zugeführten Brennstoffes und eines Oxidationsmittels in elektrische Energie wandeln. Der Akkumulator kann ein wiederaufladbares Gerät sein, das elektrische Energie auf elektrochemischer Basis speichert. Bei der Entladung des Akkumulators wird gespeicherte chemische Energie durch die elektrochemische Redoxreaktion in elektrische Energie umgewandelt. Der Akkumulator kann ein Lithium-Ionen-Akku sein. Unter dem Begriff "Batterie" kann eine Primärbatterie, die nicht wiederaufladbar ist oder eine Sekundärbatterie (bzw. ein Akkumulator), die wiederaufladbar ist verstanden werden. Die Primärantriebsquelle kann eine außerhalb der Straßenbaumaschine befindliche externe Stromquelle, beispielsweise ein öffentliches oder privates Stromnetz, sein.

Das Primärantriebsystem kann eine elektrische Schnittstelle zwischen den jeweiligen Einzelantrieben und dem Energieversorgungssystem aufweisen. Jeder der in der Straßenbaumaschine zu der gewünschten Zeit integrierte oder integrierbare Energieversorgungspfad des Energieversorgungssystems kann an dieser elektrischen Schnittstelle angeschlossen werden. In der elektrischen Schnittstelle werden die jeweiligen elektrischen Verbindungselemente der Einzelantriebe und der Energieversorgungspfade zur Übertragung von elektrischem Strom miteinander in Kontakt gebracht. Durch die elektrische Schnittstelle kann jeder der gesonderten Energieversorgungspfade die Einzelantriebe einzeln oder unabhängig voneinander mit elektrischem Strom versorgen.

An der elektrischen Schnittstelle kann jeder der Einzelantriebe und/oder jeder der Energieversorgungspfade, bevorzugt parallel, angeschlossen sein. Die Einzelantriebe können stromabwärts der elektrischen Schnittstelle angeschlossen sein. Die Energieversorgungspfade können stromaufwärts der elektrischen Schnittstelle angeschlossen sein. An der elektrischen Schnittstelle kann für jeden der Einzelantriebe und/oder für jeder der Energieversorgungspfade ein Schalter angeschlossen sein.

Die elektrische Schnittstelle kann einen Stromverteiler aufweisen. Die elektrische Schnittstelle kann ein Stromverteiler sein. In dem Stromverteiler kann die Stromversorgung in einzelne Stromkreise für die jeweiligen Einzelantriebe aufgeteilt werden. Die elektrische Schnittstelle kann einen Stromrichter, bevorzugt einen Wechselrichter oder einen Gleichrichter, aufweisen. Die elektrische Schnittstelle kann ein Stromrichter, bevorzugt ein Wechselrichter oder ein Gleichrichter sein. Der Stromrichter kann einen Stromverteiler umfassen. In dem Stromrichter kann der von jeder der mindestens drei gesonderten Energieversorgungspfade gespeisten elektrischen Strom (Gleichstrom oder Wechselstrom) umgewandelt/geändert werden. Die Einzelantriebe können mit Wechselstrom angetrieben werden. In diesem Fall kann der Stromrichter ein Wechselrichter sein. Der Wechselrichter kann den von jeder der mindestens drei gesonderten Energieversorgungspfade gespeisten elektrischen Gleichstrom in Wechselstrom umwandeln.

Ein erster Energieversorgungspfad des Energieversorgungssystems kann einen ersten Kraftstofftank, einen ersten Verbrennungsmotor, einen Generator, und bevorzugt einen Gleichrichter aufweisen. Diese Komponenten können in dieser Reihenfolge an dem Energieversorgungssystem angeordnet werden und den ersten Energieversorgungspfad bilden. Der Gleichrichter des ersten Energieversorgungspfades kann direkt an der elektrischen Schnittstelle bzw. an dem Wechselrichter oder direkt an einer stromaufwärts der elektrischen Schnittstelle angeschlossenen Pufferbatterie angeschlossen sein. Die Pufferbatterie kann der Stromversorgung von Einzelantrieben bei Stromausfall oder zum Ausgleich unterschiedlicher Lastzustände (Spannungsstabilisierung, Abfangen kurzzeitiger Lastspitzen) dienen. Es wäre auch vorstellbar, dass der Generator des ersten Energieversorgungspfads direkt an der elektrischen Schnittstelle angeschlossen ist, wobei bevorzugt die elektrische Schnittstelle einen Stromverteiler und/oder einen Frequenzumrichter aufweisen. Der erste Energieversorgungspfad kann mehrere Kraftstofftanks aufweisen, beispielsweise einen Dieselstofftank und einen Biodieselstofftank, wobei bevorzugt beide der Tanks an dem Verbrennungsmotor bzw. an dem Dieselmotor angeschlossen sind.

Der erste Energieversorgungspfad des Energieversorgungssystems kann einen zweiten Kraftstofftank und einen zweiten Verbrennungsmotor aufweisen. Der zweite Kraftstofftank kann ein Brenngastank sein und der zweite Verbrennungsmotor kann ein Gasmotor bzw. ein Wasserstoffmotor sein. In dem Brenngastank kann Erdgas oder Wasserstoff aufbewahrt sein. Der erste und der zweite Verbrennungsmotor können mit dem Generator mechanisch gekoppelt sein.

Ein zweiter Energieversorgungspfad des Energieversorgungssystems kann einen Wasserstofftank, bevorzugt einen gesonderten Tank für Oxidationsmittel und eine Brennstoffzelle aufweisen. Der Wasserstofftank und/oder die Brennstoffzelle kann direkt an der elektrischen Schnittstelle oder direkt an einer stromaufwärts der elektrischen Schnittstelle angeschlossenen Pufferbatterie angeschlossen sein.

Ein dritter Energieversorgungspfad des Energieversorgungssystems kann einen Akkumulator, bevorzugt einen auswechselbaren Akkumulator, aufweisen. Der Akkumulator des dritten Energieversorgungspfades kann direkt an der elektrischen Schnittstelle angeschlossen sein.

Der dritte Energieversorgungspfad kann einen ersten Stromanschluss aufweisen, wobei der Stromanschluss mit einer außerhalb der Straßenbaumaschine befindlichen externen Stromquelle verbunden sein. Die Stromquelle kann ein öffentliches oder privates Stromnetz sein, oder ein Ladefahrzeug mit einem Energiespeicher (bzw. einem Akkumulator) sein.

Der dritte Energieversorgungspfad des Energieversorgungssystems kann einen Gleichrichter aufweisen, der zwischen dem Akkumulator und dem ersten Stromanschluss angeschlossen ist. Dadurch kann der Akkumulator aufgeladen werden.

Ein vierter Energieversorgungspfad des Energieversorgungssystems kann einen zweiten Stromanschluss, der mit einer außerhalb der Straßenbaumaschine befindlichen externen Stromquelle verbunden ist, und eine Stromleitung zwischen dem zweiten Stromanschluss und der elektrischen Schnittstelle aufweisen. Dadurch können die Einzelantriebe direkt von der externen Stromquelle versorgt werden.

An der elektrischen Schnittstelle können eine oder mehrere elektrisch betreibbare Heizvorrichtungen angeschlossen sein, um von dem Energieversorgungssystem der Straßenbaumaschine mit elektrischem Strom versorgt zu werden.

Die Erfindung betrifft gemäß einem vierten Aspekt ein Verfahren zum Aufbauen eines Primärantriebssystems einer Straßenbaumaschine zum Antreiben von Getrieben der Straßenbaumaschine, insbesondere eines Fahrwerks und/oder von Arbeitsaggregaten der Straßenbaumaschine, wobei das Primärantriebssystem mehrere Einzelantriebe und ein Energieversorgungssystem zum Versorgen der Einzelantriebe mit elektrischem Strom aufweist, wobei das Verfahren die folgenden Schritte aufweist: Koppeln der Einzelantriebe mit den Getrieben, Anschließen der Einzelantriebe an einer elektrischen Schnittstelle, Anbringen eines ersten Energieversorgungspfads umfassend einen Kraftstofftank, einen Verbrennungsmotor, einen Generator, und bevorzugt einen Geleichrichter in dem Energieversorgungssystem, und Anschließen des Gleichrichters direkt an der elektrischen Schnittstelle oder direkt an einer stromaufwärts der elektrischen Schnittstelle angeschlossenen Pufferbatterie, und/oder Anbringen eines zweiten Energieversorgungspfads umfassend einen Wasserstofftank und eine Brennstoffzelle in dem Energieversorgungssystem und Anschließen der Brennstoffzelle direkt an der elektrischen Schnittstelle oder direkt an einer stromaufwärts der elektrischen Schnittstelle angeschlossenen Pufferbatterie, und/oder Anbringen eines dritten Energieversorgungspfads umfassend einen Akkumulator, bevorzugt einen auswechselbaren Akkumulator in dem Energieversorgungssystem und Anschließen des Ackumulators direkt an der elektrischen Schnittstelle, und/oder Anbringen eines vierten Energieversorgungspfads umfassend einen Stromanschluss, der mit einer außerhalb der Straßenbaumaschine befindlichen externen Stromquelle verbunden ist, und Anschließen einer Stromleitung zwischen dem Stromanschluss und der elektrischen Schnittstelle.

Sämtliche Merkmale, die vorab in Zusammenhang der erfindungsgemäßen Straßenbaumaschine offenbart sind, können einzeln oder zusammen in dem erfindungsgemäßen Verfahren zum Einsatz kommen.

Die Straßenbaumaschine gemäß dem ersten oder dritten Aspekt der Erfindung kann mit Verfahrensschritten des Verfahrens gemäß dem zweiten oder vierten Aspekt der Erfindung hergestellt bzw. zusammengebaut werden. Das Verfahren gemäß dem zweiten oder vierten Aspekt der Erfindung kann mit einer Straßenbaumaschine gemäß dem ersten oder dritten Aspekt der Erfindung durchgeführt werden. Die Straßenbaumaschine gemäß dem ersten Aspekt der Erfindung kann mit Merkmalen der Straßenbaumaschine gemäß dem dritten Aspekt der Erfindung erweitert bzw. kombiniert werden. Die Straßenbaumaschine gemäß dem dritten Aspekt der Erfindung kann mit Merkmalen der Straßenbaumaschine gemäß dem ersten Aspekt der Erfindung erweitert bzw. kombiniert werden.

Die Ausdrücke "erstes", "zweites", "drittes" und "viertes" sind lediglich als Bezeichnungen für ein bestimmtes Element oder eine bestimmte Komponente zu verstehen und müssen nicht unbedingt eine bestimmte Reihenfolge oder Anordnung der genannten Komponenten oder Elemente angeben. So impliziert beispielsweise das Vorhandensein eines vierten Elements/Komponente nicht zwangsläufig das Vorhandensein eines ersten, zweiten oder dritten Elements/Komponente und umgekehrt.

Im Folgenden werden beispielhafte Ausführungsformen anhand der Figuren erläutert.

Dabei zeigt
Fig. 1 eine schematische Perspektivansicht einer Straßenbaumaschine in Form eines Straßenfertiges,
Fig. 2 eine schematische Darstellung eines Antriebssystemseiner erfindungsgemäßen Straßenbaumaschine,
Fig. 3 eine schematische Darstellung eines Primärantriebssystems in einer Ausführungsform einer erfindungsgemäßen Straußenbaumaschine,
Fig. 4 eine schematische Darstellung eines Primärantriebssystems in einer weiteren Ausführungsform einer erfindungsgemäßen Straußenbaumaschine, und
Fig. 5 eine schematische Darstellung eines Primärantriebssystems in einer weiteren Ausführungsform einer erfindungsgemäßen Straußenbaumaschine.

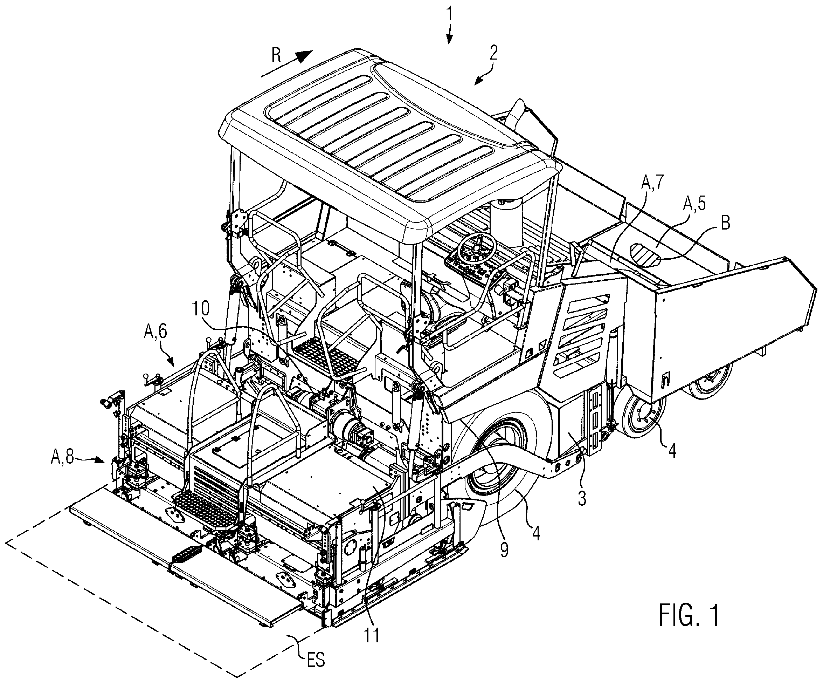

Figur 1 zeigt in perspektivischer Ansicht von schräg hinten eine Straßenbaumaschine 1, bei der es sich um einen Straßenfertiger 2 zur Herstellung eines Straßenbelags ES handelt. Der Straßenfertiger 2 ist selbstfahrend. Der Straßenfertiger 2 umfasst ein Fahrgestell 3, ein Fahrwerk 4, Arbeitsaggregate A, wie einen Gutbunker 5 zur Aufnahme eines Einbaumaterials B (Asphaltmischgut), eine an dem Fahrgestell 3 höhenverstellbar gelagerte und in Fahrtrichtung R geschleppte Einbaubohle 6, und eine Fördereinheit 7, umfassend ein Förderband, um das Einbaumaterial B aus einem Gutbunker 5 des Straßenfertigers 2 der Einbaubohle 6 zu einer Querverteilervorrichtung 8 (mit einer Verteilerschnecke) des Straßenfertigers 2 zur Verfügung zu stellen.

Der Straßenfertiger 2 umfasst ein Primärantriebssystem 9 zum Antreiben von Getrieben des Straßenfertigers 2, insbesondere des Fahrwerks 4 und/oder der Arbeitsaggregate A des Straßenfertigers 2. Der Straßenfertiger 2 umfasst mehrere Einzelantriebe 10, die elektrisch betreibbar sind. Die Einzelantriebe 10 können beispielsweise rotatorische Antriebe für das Fahrwerk 4, rotatorische Antriebe für die Fördereinheit 7, rotatorische Antriebe für die Verteilerschnecken der Querverteilervorrichtung 8, lineare Antriebe für einen Gutbunkerwandzylinder, lineare Antriebe für den Nivellierzylinder, lineare Antriebe für das Heben und Senken der Bohle 6, lineare Antriebe für das Teleskopieren der Bohle 6 und rotatorische Antriebe bzw. ein rotatorisches Antriebssystem für die Verdichtungseinrichtungen der Bohle 6 sein. Der Straßenfertiger 2 umfasst auch eine Bohlenheizung 11.

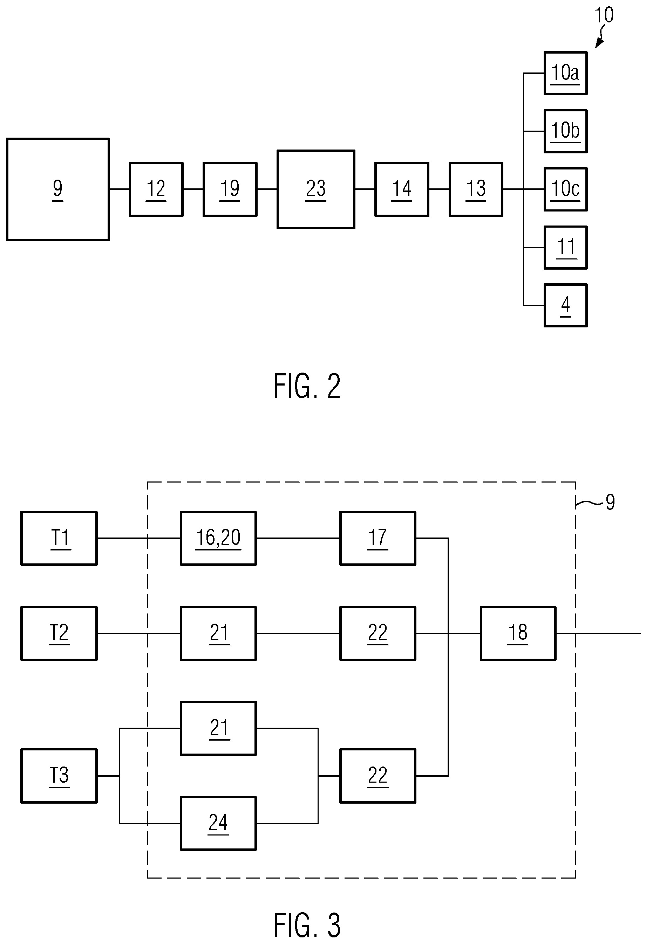

Die Komponenten des Antriebssystems der Straßenbaumaschine 1 sind in der Figur 2 schematisch dargestellt. Die Straßenbaumaschine 1 umfasst ein Primärantriebssystem 9 und wenigstens einen Einzelantrieb 10. Beispielsweise kann die Straßenbaumaschine 1 drei Einzelantriebe 10, wie etwa mindestens ein Hydraulikaggregat 10a zum Ausführen von translatorischen Bewegungen, mindestens einen ersten elektrischen Antrieb 10b zum Ausführen von translatorischen Bewegungen und mindestens einen zweiten elektrischen Antrieb 10c zum Ausführen von rotatorischen Bewegungen, umfassen, wie in Figur 2 dargestellt. Die Einzelantriebe 10 werden mit Strom aus dem Primärantriebssystem 9 betrieben. In Figur 2 ist des Weiteren eine Bohlenheizung 11 dargestellt, welche ebenfalls mit Strom aus dem Primärantriebssystem 9 betrieben werden kann. Das Fahrwerk 4 kann ebenfalls mit Strom aus dem Primärantriebssystem 9 betrieben werden. Die Einzelantriebe 10 können insbesondere die Arbeitsaggregate A, wie den Glutbunker 5, die Einbaubohle 6, die Fördereinheit 7 und/oder die Querverteilervorrichtung 8, antreiben bzw. mit diesen zusammenwirken.

Zwischen dem Primärantriebssystem 9 und den Einzelantriebe 10 ist eine Pufferbatterie 23 angeordnet. Die Pufferbatterie 23 dient dazu, Belastungsspitzen auszugleichen. Durch die Pufferbatterie 23 kann das Primärantriebssystem 9 kleiner dimensioniert werden. Die Pufferbatterie 23 kann eine Gleichstrombatterie oder eine Wechselstrombatterie sein. Zwischen dem Primärantriebssystem 9 und der Pufferbatterie 23 kann ein erster Stromrichter 19 angeordnet sein. Wenn der vom Primärantriebssystem 23 generierte Strom (Gleich- oder Wechselstrom) nicht dem in der Pufferbatterie 23 gespeicherten Strom entspricht, ist der erste Stromrichter 19 erforderlich. Der erste Stromrichter 19 kann ein Gleichrichter oder ein Wechselrichter sein. Wird beispielsweise vom Primärantriebssystem 9 Gleichstrom generiert und eine Wechselstrombatterie als Pufferbatterie 23 verwendet, so ist der erste Stromrichter 19 ein Wechselrichter. Wird vom Primärantriebssystem 9 Wechselstrom generiert und eine Gleichstrombatterie als Pufferbatterie 23 verwendet, so ist der erste Stromrichter 19 ein Gleichrichter. Alternativ oder zusätzlich kann der erste Stromrichter 19 einen Stromwandler umfassen.

Zwischen der Pufferbatterie 23 und den Einzelantrieben 10 kann ein zweiter Stromrichter 14 angeordnet sein. Wenn der in der Pufferbatterie 23 gespeicherten Strom (Gleich- oder Wechselstrom) nicht dem von den Einzelantrieben 10 benötigtem Strom entspricht, ist der zweite Stromrichter 14 erforderlich. Der zweite Stromrichter 14 kann ein Wechselrichter oder ein Gleichrichter sein. Es können auch mehrere zweite Stromrichter 14 zwischen der Pufferbatterie 23 und den Einzelantrieben 10 angeordnet sein.

Ein Stromverteiler 13 ist zwischen der Pufferbatterie 23 und den Einzelantrieben 10 angeordnet. Der Stromverteiler 13 kann zwischen der Pufferbatterie 23 und dem einen oder mehreren Stromrichtern 14 angeordnet sein. Der Stromverteiler 13 kann zwischen dem einen oder mehreren Stromrichtern 14 und den Einzelantrieben 10 angeordnet sein.

Eine Schnittstelle 12 ist zwischen dem Primärantriebssystem 9 und den Einzelantrieben 10 angeordnet. Durch die Schnittstelle 12 ist das Primärantriebssystem 9 koppelbar mit den Einzelantrieben 10 verbunden. Die Schnittstelle 12 kann zwischen dem Primärantriebssystem 9 und der Pufferbatterie 23 angeordnet sein. Die Schnittstelle 12 kann zwischen dem Primärantriebssystem 9 und dem ersten Stromrichter 19 angeordnet sein. Die Schnittstelle 12 kann zwischen der Pufferbatterie 23 und dem ersten Stromrichter 19 angeordnet sein. Die Schnittstelle 12 kann zwischen der Pufferbatterie 23 und den Einzelantrieben 10 angeordnet sein.

Figur 3 zeigt ein Primärantriebssystem 9 in einer ersten Ausführungsform. Die parallel verlaufenden Stränge sind dabei als Alternativen zu sehen. Das Primärantriebssystem 9 umfasst einen Kraftstofftank 16 oder einen Bio-Kraftstofftank 20, welcher einen Verbrennungsmotor 17, beispielsweise einen Dieselmotor, speist. Das Primärantriebssystem 9 umfasst des Weiteren einen Generator 18. Der Verbrennungsmotor 17 betreibt den Generator 18, welcher Wechselstrom erzeugt. Der vom Generator 18 erzeugte Wechselstrom wird zur Pufferbatterie 23 geleitet. Die Kraftstofftanks 16, 20 können vor Ort (Betriebsort) von mobilen Kraftstoffversorgungsfahrzeugen T1 (Tankwagen) aufgefüllt werden. Die Kraftstoffversorgungsfahrzeuge sind jedoch nicht Teil des in der Straßenbaumaschine 1 verbauten Primärantriebssystems 9.

Alternativ kann das Primärantriebssystem 9 einen mit Gas, insbesondere Erdgas oder Autogas, gefüllten Drucktank 21 und einen Gasmotor 22 umfassen. Der mit Gas aus dem Drucktank 21 betriebene Gasmotor 22 betreibt ebenfalls den Generator 18. Der Drucktank 21 kann vor Ort (Betriebsort) von mobilen Kraftstoffversorgungsfahrzeugen T2 (Tankwagen) aufgefüllt werden.

Alternativ kann das Primärantriebssystem 9 einen mit Wasserstoff gefüllten Drucktank 21 oder Wasserstofftank 24 und einen Gasmotor 22 umfassen. Alternativ kann auch ein Tank für LOHC (flüssige organische Wasserstoffträger) oder ein Tank für Oxidationsmittel (nicht gezeigt) verwendet werden. Der mit Wasserstoff aus dem Drucktank 21 oder Wasserstofftank 24 betriebene Gasmotor 22 betreibt ebenfalls den Generator 18. Der Drucktank 21 kann vor Ort (Betriebsort) von mobilen Wasserstoffversorgungsfahrzeugen T3 (Tankwagen) aufgefüllt werden.

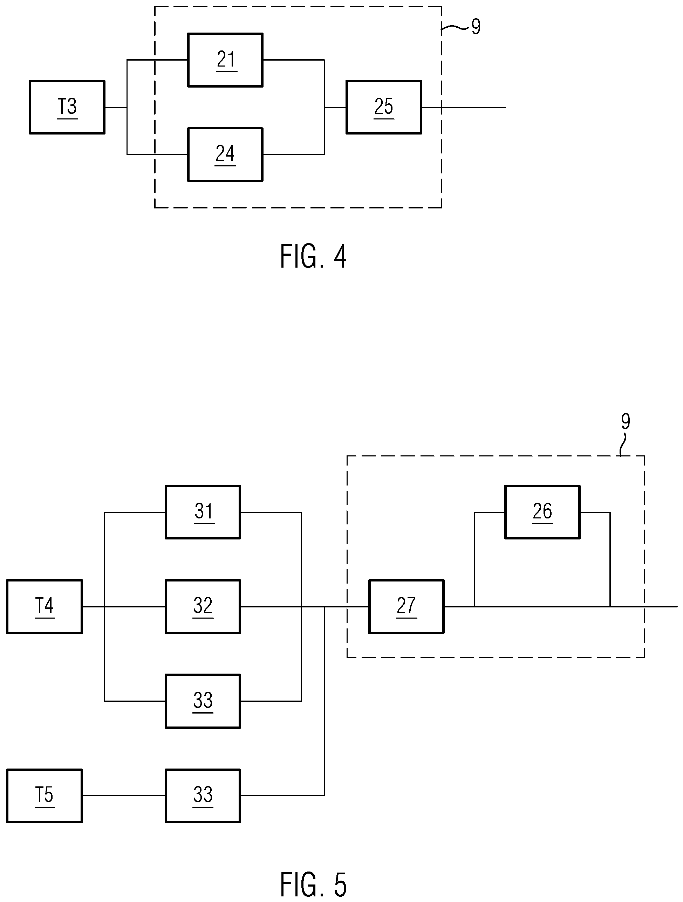

Figur 4 zeigt ein Primärantriebssystem 9 in einer weiteren Ausführungsform. Die parallel verlaufenden Stränge sind dabei als Alternativen zu sehen. Das Primärantriebssystem 9 umfasst einen mit Wasserstoff gefüllten Drucktank 21 oder Wasserstofftank 24 und eine Brennstoffzelle 25. Alternativ kann auch ein Tank für LOHC (flüssige organische Wasserstoffträger) oder ein Tank für Oxidationsmittel (nicht gezeigt) verwendet werden. Die Brennstoffzelle 25 wird Wasserstoff aus dem Drucktank 21 oder Wasserstofftank 24 betrieben. Der von der Brennstoffzelle 25 erzeugte Strom wird zur Pufferbatterie 23 geleitet. Der Wasserstofftank 24 (auch der Tank für Oxidationsmittel) kann vor Ort (Betriebsort) von mobilen Wasserstoffversorgungsfahrzeugen T (Tankwagen) aufgefüllt werden.

Figur 5 zeigt ein Primärantriebssystem 9 in einer weiteren Ausführungsform. Das Primärantriebssystem 9 kann einen dritten Gleichrichter 27 umfassen. Der dritte Stromrichter 27 wird mit Strom aus dem öffentlichen Stromnetz T4 gespeist. Das öffentliche Stromnetz T4 kann mittels einer Oberleitung 31, einer Stromschiene 32 und/oder einem Schleppkabel 33 angezapft werden. Alternativ kann eine örtliche Stromerzeugung T5, beispielsweise ein Windrad, eine Photovoltaikanlage und/oder ein Generator, verwendet werden, welche über ein Schleppkabel 33 mit dem dritten Stromrichter 27 verbunden ist. Vom dritten Stromrichter 27 wird Strom zur Pufferbatterie 23 geleitet. Optional ist zwischen dem dritten Stromrichter 27 und der Pufferbatterie 23 ein Akkumulator 26 angeordnet. Der dritte Stromrichter 27 kann ein Gleichrichter, ein Wechselrichter oder Wandler sein.

Die Straßenbaumaschine 1 kann auch ein Beschickerfahrzeug zum Beschicken eines Straßenfertigers, eine Fräse oder ein Gleitschalungsfertiger sein.

## Patentansprüche

1. Straßenbaumaschine (1) umfassend,
ein Fahrgestell (3),
ein Fahrwerk (4),
ein oder mehrere Arbeitsaggregate (A, 5, 6, 7, 8) zum Ein- oder Ausbau eines Straßenbelags (ES) und/oder zum Fördern eines Einbaumaterials (B),
ein oder mehrere Einzelantriebe (10), die insbesondere dazu ausgebildet sind, das Fahrwerk (4) und/oder die Arbeitsaggregate (A, 5, 6, 7, 8) anzutreiben,
ein Primärantriebssystem (9) zum Antreiben des ein oder der mehreren Einzelantriebe (10) der Straßenbaumaschine (1), und
eine Schnittstelle (12),
wobei die Schnittstelle (12) dazu ausgebildet ist, das Primärantriebssystem (9) koppelbar mit dem einen oder den mehreren Einzelantrieben (10) zu verbinden, insbesondere eine Versorgung des einen oder der mehreren Einzelantriebe (10) mit Strom aus dem Primärantriebssystem (9) zu ermöglichen, und
das Primärantriebssystem (9) austauschbar ausgebildet ist,
**dadurch gekennzeichnet, dass**
die Straßenbaumaschine (1) eine Steuerung umfasst, wobei die Steuerung dazu ausgebildet ist, die Art des Primärantriebssystems (9) zu erkennen.

2. Straßenbaumaschine gemäß Anspruch 1, **dadurch gekennzeichnet, dass** das Primärantriebssystem (9) eine Primärantriebsquelle aufweist, wobei die Primärantriebsquelle aus der folgenden Gruppe ausgewählt ist: ein Verbrennungsmotor (17), eine Brennstoffzelle (25), ein Akkumulator (26) oder eine außerhalb der Straßenbaumaschine (1) befindliche externe Stromquelle (T4, T5).

3. Straßenbaumaschine gemäß Anspruch 1, **dadurch gekennzeichnet, dass** eine Pufferbatterie (23), insbesondere eine Gleichstrombatterie oder eine Wechselstrombatterie, zwischen dem Primärantriebssystem (9) und dem ein oder den mehreren Einzelantrieben (10) angeordnet ist.

4. Straßenbaumaschine gemäß Anspruch 3, **dadurch gekennzeichnet, dass** ein erster Stromrichter (19), insbesondere ein erster Wechselrichter, erster Gleichrichter oder erster Wandler, zwischen dem Primärantriebssystem (9) und der Pufferbatterie (23) angeordnet ist.

5. Straßenbaumaschine gemäß Anspruch 4, **dadurch gekennzeichnet, dass** ein oder mehrere zweite Stromrichter (14), insbesondere zweite Wechselrichter oder zweite Gleichrichter, zwischen der Pufferbatterie (23) und dem einen oder den mehreren Einzelantrieben (10) angeordnet ist.

6. Straßenbaumaschine gemäß einem der Ansprüche 3 bis 5, **dadurch gekennzeichnet, dass** ein Stromverteiler (13) zwischen der Pufferbatterie (23) und dem einen oder den mehreren Einzelantrieben (10) angeordnet ist, wobei der Stromverteiler (13) insbesondere zwischen dem einen oder den mehreren zweiten Stromrichtern (14) und der Pufferbatterie (23) oder dem einen oder den mehreren Einzelantrieben (10) angeordnet ist.

7. Straßenbaumaschine gemäß einem der vorangehenden Ansprüche, **dadurch gekennzeichnet, dass** das Primärantriebssystem (9) Lastaufnahmepunkte, insbesondere für einen Kran und/oder einen Gabelstapler, aufweist.

8. Straßenbaumaschine gemäß Anspruch 7, **dadurch gekennzeichnet, dass** die Lastaufnahmepunkte an einem Verbrennungsmotor (17), einer Brennstoffzelle (25), einem Akkumulator (26), einem Kraftstofftank (16, 20), einem Drucktank (21), einem Wasserstofftank (24), oder einer beliebigen Kombination davon angebracht sind.

9. Straßenbaumaschine gemäß einem der vorangehenden Ansprüche, **dadurch gekennzeichnet, dass** die Straßenbaumaschine (1) mehrere unterschiedliche Primärantriebssysteme (9) aufweist.

10. Straßenbaumaschine gemäß einem der vorangehenden Ansprüche, **dadurch gekennzeichnet, dass** die Schnittstelle (12) eine lösbare mechanische Verbindung, eine erste lösbare elektrische Verbindung und/oder eine zweite lösbare elektrische Verbindung umfasst.

11. Straßenbaumaschine gemäß einem der vorangehenden Ansprüche, **dadurch gekennzeichnet, dass** die Steuerung dazu ausgebildet ist, antriebsspezifische Informationen in Abhängigkeit des Primärantriebssystems (9) einem Nutzer darzustellen, insbesondere diese auf einem Bediendisplay zu visualisieren.

12. Straßenbaumaschine gemäß einem der vorangehenden Ansprüche, **dadurch gekennzeichnet, dass** die Steuerung dazu ausgebildet ist, die Straßenbaumaschine (1) in Abhängigkeit des Primärantriebssystems (9) zu steuern, insbesondere den ein oder die mehreren Einzelantriebe (10) der Straßenbaumaschine (1) anzusteuern.

13. Verfahren zur Montage einer Straßenbaumaschine (1), umfassend ein oder mehrere Einzelantriebe (10), wobei die Einzelantriebe (10) zum Antreiben der Straßenbaumaschine (1, 2), insbesondere eines Fahrwerks (4) und/oder von Arbeitsaggregaten (A, 5, 6, 7, 8) der Straßenbaumaschine (1) ausgebildet sind, umfassend:
- Koppeln des einen oder der mehreren Einzelantriebe (10) mit dem Fahrwerk und/oder den Arbeitsaggregaten (A, 5, 6, 7, 8),
- Anschließen des einen oder der mehreren Einzelantriebe (10) an eine Schnittstelle (12),
- Einsetzen eines ersten Primärantriebssystems (9) in die Straßenbaumaschine (1), und
- Anschließen des ersten Primärantriebssystems (9) an die Schnittstelle (12),
- Trennen des ersten Primärantriebssystems (9) von der Schnittstelle (12),
- Entfernen des ersten Primärantriebssystems (9) von der Straßenbaumaschine (1),
- Einsetzen eines zweiten Primärantriebssystems (9) in die Straßenbaumaschine (1), und
- Anschließen des zweiten Primärantriebssystems (9) an die Schnittstelle (12),
**dadurch gekennzeichnet, dass**
das erste Primärantriebssystem (9) und das zweite Primärantriebssystem (9) in ihrer Art voneinander unterschiedlich sind.

## Claims

1. Road construction machine (1) comprising
a chassis (3),
a driving gear (4),
one or more working aggregates (A, 5, 6, 7, 8) for installing or removing a road surface (ES) and/or for conveying a paving material (B),
one or more individual drives (10) which are adapted in particular to power the driving gear (4) and/or the working aggregates (A, 5, 6, 7, 8),
a primary drive system (9) for powering the one or more individual drives (10) of the road construction machine (1), and
an interface (12),
wherein the interface (12) is adapted to connect the primary drive system (9) in a coupleable manner to the one or more individual drives (10), in particular to enable the one or more individual drives (10) to be supplied with power from the primary drive system (9), and
the primary drive system (9) is adapted to be replaceable,
**characterized in that**
the road construction machine (1) comprises a control system, wherein the control system is adapted to recognize the type of primary drive system (9).

2. Road construction machine according to claim 1, **characterized in that** the primary drive system (9) has a primary drive source, wherein the primary drive source is selected from the following group: a combustion engine (17), a fuel cell (25), an accumulator (26) or an external power source (T4, T5) located outside the road construction machine (1).

3. Road construction machine according to claim 1, **characterized in that** a buffer battery (23), in particular a direct current battery or an alternating current battery, is arranged between the primary drive system (9) and the one or more individual drives (10).

4. Road construction machine according to claim 3, **characterized in that** a first converter (19), in particular a first inverter, first rectifier or first transformer, is arranged between the primary drive system (9) and the buffer battery (23).

5. Road construction machine according to claim 4, **characterized in that** one or more second converters (14), in particular second inverters or second rectifiers, are arranged between the buffer battery (23) and the one or more individual drives (10).

6. Road construction machine according to one of claims 3 to 5, **characterized in that** a power distributor (13) is arranged between the buffer battery (23) and the one or more individual drives (10), wherein the power distributor (13) is arranged in particular between the one or more second converters (14) and the buffer battery (23) or the one or more individual drives (10).

7. Road construction machine according to one of the preceding claims, **characterized in that** the primary drive system (9) has lifting points, in particular for a crane and/or a forklift.

8. Road construction machine according to claim 7, **characterized in that** the lifting points are attached to a combustion engine (17), a fuel cell (25), an accumulator (26), a fuel tank (16, 20), a pressure tank (21), a hydrogen tank (24), or any combination thereof.

9. Road construction machine according to one of the preceding claims, **characterized in that** the road construction machine (1) comprises several different primary drive systems (9).

10. Road construction machine according to one of the preceding claims, **characterized in that** the interface (12) comprises a releasable mechanical connection, a first releasable electrical connection and/or a second releasable electrical connection.

11. Road construction machine according to one of the preceding claims, **characterized in that** the control system is adapted to display drive-specific information to a user depending on the primary drive system (9), in particular to visualize it on an operating display.

12. Road construction machine according to one of the preceding claims, **characterized in that** the control system is adapted to control the road construction machine (1) depending on the primary drive system (9), in particular to control the one or more individual drives (10) of the road construction machine (1).

13. Method for assembling a road construction machine (1), comprising one or more individual drives (10), wherein the individual drives (10) are adapted for powering the road construction machine (1, 2), in particular a driving gear (4) and/or working aggregates (A, 5, 6, 7, 8) of the road construction machine (1), comprising:
- coupling the one or more individual drives (10) to the driving gear and/or the working aggregates (A, 5, 6, 7, 8),
- connecting the one or more individual drives (10) to an interface (12),
- inserting a first primary drive system (9) into the road construction machine (1), and
- connecting the first primary drive system (9) to the interface (12),
- disconnecting the first primary drive system (9) from the interface (12),
- removing the first primary drive system (9) from the road construction machine (1),
- inserting a second primary drive system (9) into the road construction machine (1), and
- connecting the second primary drive system (9) to the interface (12),
**characterized in that**
the first primary drive system (9) and the second primary drive system (9) are different in type from each other.

## Revendications

1. Machine de construction routière (1) comprenant,
un châssis de véhicule (3),
un châssis roulant (4),
un ou plusieurs groupes de travail (A, 5, 6, 7, 8) pour la pose ou l'enlèvement d'un revêtement routier (ES) et/ou pour le transport d'un matériau de pose (B),
un ou plusieurs entraînements individuels (10), conçus en particulier pour entraîner le châssis roulant (4) et/ou les groupes de travail (A, 5, 6, 7, 8),
un système d'entraînement primaire (9) pour entraîner lesdits un ou plusieurs entraînements individuels (10) de la machine de construction routière (1), et
une interface (12),
dans laquelle l'interface (12) est conçue pour connecter de manière accouplable le système d'entraînement primaire (9) auxdits un ou plusieurs entraînements individuels (10), en particulier pour permettre l'alimentation en courant desdits un ou plusieurs entraînements individuels (10) par le système d'entraînement primaire (9), et le système d'entraînement primaire (9) est conçu pour être interchangeable,
**caractérisée**
**en ce que** la machine de construction routière (1) comporte un contrôleur, dans laquelle le contrôleur est conçu pour reconnaître le type du système d'entraînement primaire (9).

2. Machine de construction routière selon la revendication 1, **caractérisée en ce que** le système d'entraînement primaire (9) comporte une source d'entraînement primaire, dans laquelle la source d'entraînement primaire est sélectionnée dans le groupe suivant : un moteur à combustion interne (17), une pile à combustible (25), un accumulateur électrique (26) et une source d'alimentation externe (T4, T5) située à l'extérieur de la machine de construction routière (1).

3. Machine de construction routière selon la revendication 1, **caractérisée en ce qu'**une batterie tampon (23), en particulier une batterie à courant continu ou une batterie à courant alternatif, est agencée entre le système d'entraînement primaire (9) et lesdits un ou plusieurs entraînements individuels (10).

4. Machine de construction routière selon la revendication 3, **caractérisée en ce qu'**un premier convertisseur de courant (19), en particulier un premier onduleur, un premier redresseur ou un premier transformateur, est agencé entre le système d'entraînement primaire (9) et la batterie tampon (23).

5. Machine de construction routière selon la revendication 4, **caractérisée en ce qu'**un ou plusieurs deuxièmes convertisseurs de courant (14), en particulier des deuxièmes onduleurs ou des deuxièmes redresseurs, sont agencés entre la batterie tampon (23) et lesdits un ou plusieurs entraînements individuels (10).

6. Machine de construction routière selon l'une des revendications 3 à 5, **caractérisée en ce qu'**un distributeur de courant (13) est agencé entre la batterie tampon (23) et lesdits un ou plusieurs entraînements individuels (10), dans laquelle le distributeur de courant (13) est agencé en particulier entre lesdits un ou plusieurs deuxièmes convertisseurs de courant (14) et la batterie tampon (23) ou lesdits un ou plusieurs entraînements individuels (10).

7. Machine de construction routière selon l'une des revendications précédentes, **caractérisée en ce que** le système d'entraînement primaire (9) comporte des points de charge, en particulier pour une grue et/ou un chariot élévateur.

8. Machine de construction routière selon la revendication 7, **caractérisée en ce que** les points de charge sont installés sur un moteur à combustion interne (17), une pile à combustible (25), un accumulateur électrique (26), un réservoir de carburant (16, 20), un réservoir pressurisé (21), un réservoir d'hydrogène (24) ou une combinaison quelconque de ceux-ci.

9. Machine de construction routière selon l'une des revendications précédentes, **caractérisée en ce que** la machine de construction routière (1) comporte plusieurs systèmes d'entraînement primaires (9) différents.

10. Machine de construction routière selon l'une des revendications précédentes, **caractérisée en ce que** l'interface (12) comporte une connexion mécanique amovible, une première connexion électrique amovible et/ou une deuxième connexion électrique amovible.

11. Machine de construction routière selon l'une des revendications précédentes, **caractérisée en ce que** le contrôleur est conçu pour présenter à un utilisateur des informations spécifiques à l'entraînement en fonction du système d'entraînement primaire (9), en particulier pour visualiser ces informations sur un écran de commande.

12. Machine de construction routière selon l'une des revendications précédentes, **caractérisée en ce que** le contrôleur est conçu pour contrôler la machine de construction routière (1) en fonction du système d'entraînement primaire (9), en particulier pour contrôler lesdits un ou plusieurs entraînements individuels (10) de la machine de construction routière (1).

13. Procédé de montage d'une machine de construction routière (1) comprenant un ou plusieurs entraînements individuels (10), dans lequel les entraînements individuels (10) sont conçus pour entraîner la machine de construction routière (1, 2), en particulier un châssis roulant (4) et/ou des groupes de travail (A, 5, 6, 7, 8) de la machine de construction routière (1), comprenant :
- le couplage desdits un ou plusieurs entraînements individuels (10) au châssis roulant et/ou aux groupes de travail (A, 5, 6, 7, 8),
- la connexion desdits un ou plusieurs entraînements individuels (10) à une interface (12),
- l'installation d'un premier système d'entraînement primaire (9) dans la machine de construction routière (1), et
- la connexion du premier système d'entraînement primaire (9) à l'interface (12),
- la séparation du premier système d'entraînement primaire (9) de l'interface (12),
- le démontage du premier système d'entraînement primaire (9) de la machine de construction routière (1),
- l'installation d'un deuxième système d'entraînement primaire (9) dans la machine de construction routière (1), et
- la connexion du deuxième système d'entraînement primaire (9) à l'interface (12),
**caractérisé en ce que** le premier système d'entraînement primaire (9) et le deuxième système d'entraînement primaire (9) sont de types différents.
